# EUROPEAN PATENT SPECIFICATION

(11) **EP 0 393 555 B1**
(45) Date of publication and mention of the grant of the patent: **20.09.1995**
(21) Application number: 90107169.6
(22) Date of filing: 14.04.1990
(51) Int. Cl.: H04N 7/087, H04N 5/445, H04N 5/782

(54) **Improved processing of information transmitted in the vertical retrace interval of a television signal**
Verarbeitung von Information, übertragen in den vertikalen Austastlücken eines Fernsehsignals
Traitement modifié d'information transmise pendant l'intervalle de retour vertical de signal de télévision

(30) Priority: 21.04.1989 GB 8909114
(43) Date of publication of application: 24.10.1990
(73) Proprietor: RCA Thomson Licensing Corporation, Princeton, NJ 08540 (US)
(72) Inventor: Hennig, Bruno Emanuel, CH-8003 Zürich (CH)
(74) Representative: Einsel, Robert, Dipl.-Ing.

(56) References cited:
- EP-A- 0 337 336
- WO-A-90/10351
- DE-A- 3 527 939
- US-A- 4 635 121
- US-A- 4 706 121
- NTZ NACHRICHTECHNISCHE ZEITSCHRIFT. vol. 35, no. 6, 30 June 1982,BERLIN DE pages 368 - 376; H.KRUGER: 'Das Digitale Fernsehkennungssystem VPS'

## Description

### BACKGROUND

This invention relates to television signal processing apparatus for displaying desireable supplementary program-related information to a viewer. For example, the name of the broadcasting station is displayed superimposed in a predetermined portion of the image (upper right corner) while the title of the running program also is displayed superimposed in a predetermined suitable portion of the image (lower part of the TV screen). This display of supplementary information preferably is provided automatically each time a new channel is selected (including initial turn-on of the receiver). The required information is derived from a Teletext data stream and a VPS (Video Program System) signal, taking into account that the VPS data may be disposed at any spatial location within the TV program schedule (directory) page.

The original purpose of adding a supplementary VPS signal to the image-representative TV broadcast signal was to simplify the use of home video recorders. Prior to the introduction of VPS, these recorders were programmed by means of a timer, which started and stopped the VCR according to the time when the desired TV program of interest was scheduled for transmission.

Occasionally, the program of interest could not be correctly recorded, for example due to delay in the completion of the previous program.

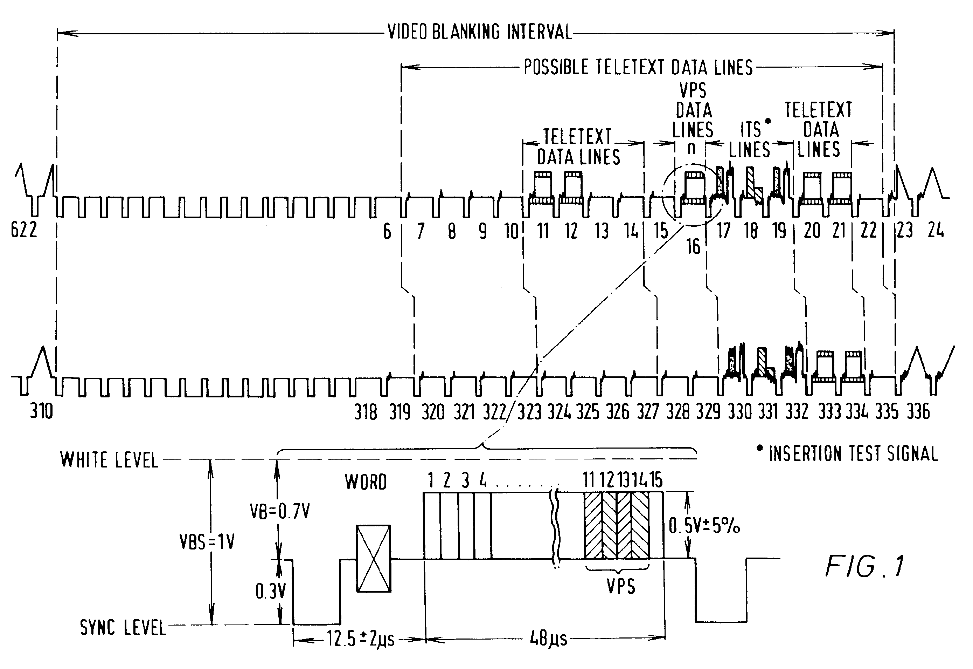

The VPS signal was intended to overcome this drawback by providing an accurate indication of the starting time of a new program. Some properties and the data format of the VPS signal are shown in Fig. 1 of the drawings and are briefly explained below. A more detailed description is available in the literature, (see for example, "VPS-Ein neues System Zur beitragsgesteuerten Programmaufzeichnung", Rundfunktech-nische Mitteilungen, Heft 4, 1985).

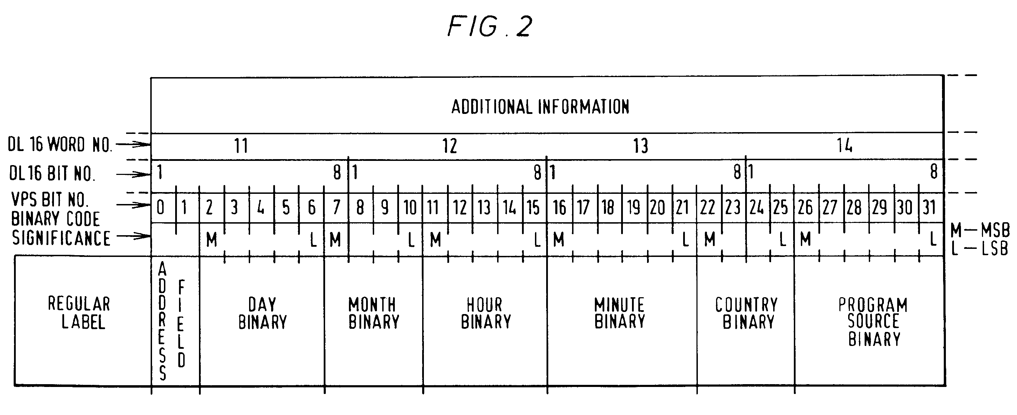

The VPS program identification code occupies four bytes (11-14) on data line 16 in the vertical banking (retrace) interval of the TV broadcast signal. The related information of these four bytes is shown in Fig. 2 of the drawings, where bits 2 - 21 specify day, month, hours and minutes of the originally scheduled start of the transmitted program. Bits 22 - 25 denote the country and bits 26 - 31 denote the transmitting station.

To make the programming of VCR's even more convenient and safer, the VPV system (Videotext Programmed VCR) was developed (See "Videotext programmierte Videoheimgerate (VPV)", Rundfunktechnische Mitteilungen, Heft 3, 1986).

In prior arrangements, recording by means of VPV is directed by the automatic transfer of the necessary and correct information to a VCR from the TV program-pages of the teletext service, where the program to be recorded is selected. The user only has to display the directory of teletext program pages and then move a cursor to the desired program title. Upon pressing an appropriate button on the remote control, the necessary VPS program identification information is transferred to the VCR. Certain VPS data are concealed and can be made visible by pressing the "reveal" button of the remote control transmitter. The concealed numbers in the teletext TV program-pages correspond exactly to the actually transmitted VPS program identification code which accompanies the image-representative signals of a program, except for a binary to decimal conversion.

It should be mentioned that the scheduled time and the VPS-time are not always identical. This is because the scheduled time is updated whenever a particular program runs overtime and subsequent programs are delayed or a schedule is otherwise changed. The VPS time always remains unchanged since it is assigned to the program and not to the actual final broadcast time.

Thus, each of station identification (program source), scheduled transmission time and program title information for many different scheduled future TV transmissions are available for use by a VCR or television receiver equipped to process, respectively, VPS, VPV or teletext information. However, the user of a conventional television receiver is not able to utilize such information to full advantage. That is, while certain TV receivers (for example Grundig Models CUC 2600/2800) are equipped with a teletext decoding system and VCR's may be equipped with a VPS decoder (see "Decoder for an Automatic Video Program Identification System (VPS)", IEEE Transactions on Consumer Electronics, Vol. CE-32, No. 3, August 1986, pp. 162 - 168), the two decoding systems are not customarily included in a single apparatus.

It has been suggested (see IEEE Transactions article cited above) that a VPS decoder can be connected in an unspecified manner in a TV receiver for providing station identification or decoding of TV sound status. In addition, other types of decoder systems for retrieving supplementary data from a broadcast television signal have been proposed (see, for example, Patent US-A-4,635,121 - Hoffman et al. granted January 6, 1987).

In any event, the number of receivable TV programs increases yearly due to the expansion of cable networks and satellite services. Unfortunately this development is confusing for the user and this confusion increases when a preferred program is time delayed from its originally scheduled broadcast time.

Therefore, it is desireable to provide support to the user through unambiguous station and program identification. The necessary information is available in a combination of the VPS and teletext signals.

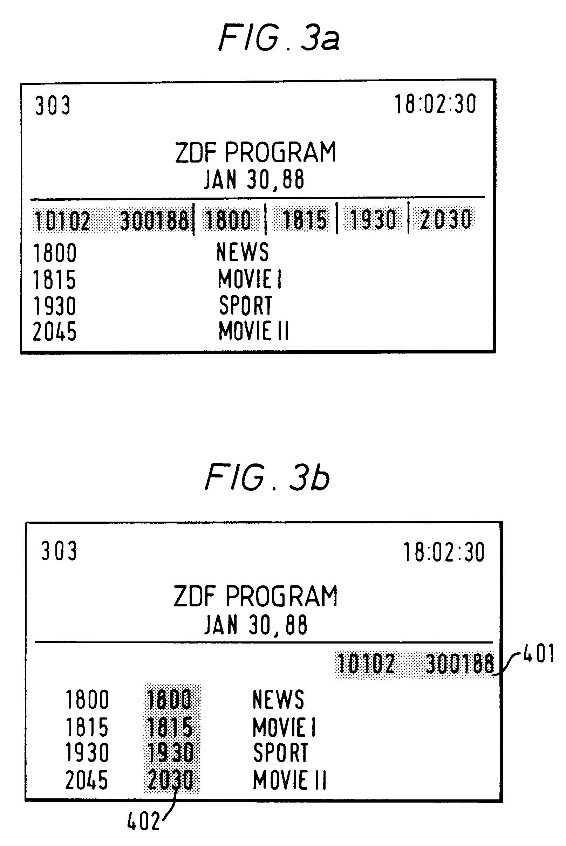

However, in 1988, the IRT (Institut fur Rundfunk Technik) in Munich released new specifications for the VPV (or VPT) system, describing acceptable alternatives for the arrangement of information on the teletext program schedule pages (see Figs. 3a and 3b for two permitted alternatives where the normally "concealed" information is shown on a shaded background). Henceforth, the location of the VPS data cannot be expected to be fixed in a single place on the teletext page. With that fact in mind, in order to identify and recover the VPS data and associated program identification (title) information within the time constraints of the data transfer bus (the so-called "I^{2C bus"}) associated with a teletext decoder, it is necessary to devise new and improved methods and apparatus whereby station and program identification information can be processed more efficiently for automatic visual presentation to a viewer.

### SUMMARY OF THE INVENTION

In accordance with the present invention, apparatus for retrieving and displaying information transmitted in the vertical blanking interval of television signals is described wherein the television signals include image-representative information and a plurality of accompanying segments of supplementary information including time-related program identification information, and a multi-page listing including program title information and program source information, the supplementary information being encoded during vertical blanking intervals of the television signal with at least the program identification information being disposed within vertical blanking intervals of related image-representative information and further being included within the listing. The apparatus comprises tuning means for selectively receiving signals transmitted by individual program sources, the received signals including image-representative information and accompanying segments of supplementary information, first signal decoder means for decoding the listing and the included program identification information, memory means for storing and retrieving at least the program title information and included program identification information decoded by the first signal decoder means. A first controller means is coupled to the first decoder means for selectively transferring the segments of supplementary information among the memory means, the first decoder means and the first controller means. A second signal decoder means is provided for decoding the program identification information disposed within blanking intervals of related image-representative information. The first controller means, upon reception of signals from an individual program source by the tuning means, sequentially causes the second signal decoder means to decode the program identification information accompanying related image-representative information, causes the first signal decoder means to identify program identification information included within the listing and to store such identification information including program title information of the listing in the memory means, the first controller means thereafter transferring the program title information from the memory means for display thereof along with related image-representative information, characterized in that the first signal decoder means is arranged for decoding a first predetermined set of pages of the directory having page numbers ending in a first predetermined set of digits and the first controller means causes such set of pages to be stored in sequence in predetermined locations in the memory means for analysis of information matching the image-related identification information during a time interval until subsequent listing pages having page numbers ending in the first predetermined set of digits are overwritten into corresponding memory spaces.

### THE DRAWINGS

In the drawings:
Figure 1 illustrates a composite video signal during the vertical blanking interval with VPS data on data line 16 and teletext data on lines 11-14;
Figure 2 illustrates the data format of the VPS information on data line 16;
Figures 3a and 3b illustrate two different arrangements of a single teletext program page (#303) in the "revealed" mode;
Figure 4 is a block diagram of a portion of a TV receiver constructed in accordance with the present invention incorporating teletext and VPS decoders;
Figure 5 is a symbolic representation of a title search method in accordance with the present invention, and
Figure 6 is a representation of a sequence of teletext pages related to the method illustrated in Fig. 5.

### DETAILED DESCRIPTION

This invention relates to a system which automatically displays information such as program source (station identification) and the title of the running program, when the TV set or other TV signal processor has been turned on or when a new channel is selected. It is applicable in those countries using teletext or the like. The teletext system in Europe transmits, apart from other material, a directory of the updated TV program pages. To display the TV program title, one has therefore to select the appropriate teletext page from the directory.

That is, in order to display the title of the running program (i.e. the program which is being received and/or displayed), a search must be made to find the teletext page containing that program.

The search is made according to this invention in a manner which is the reverse of programming a VCR by means of VPS and VPV. Thus the VPS program identification code of the received station is first read from the running program signal and then correlation in the teletext data stream is searched for. A major problem to be overcome is that the data transmission bus associated with processing teletext signals (the "I2C bus") is limited to a maximum data rate of 100 Kbits per second, thereby making it unlikely that a full page of teletext directory information can be processed and searched for title information before the next page of data arrives. It is therefore necessary to provide additional time for searching and processing the teletext signals for this purpose.

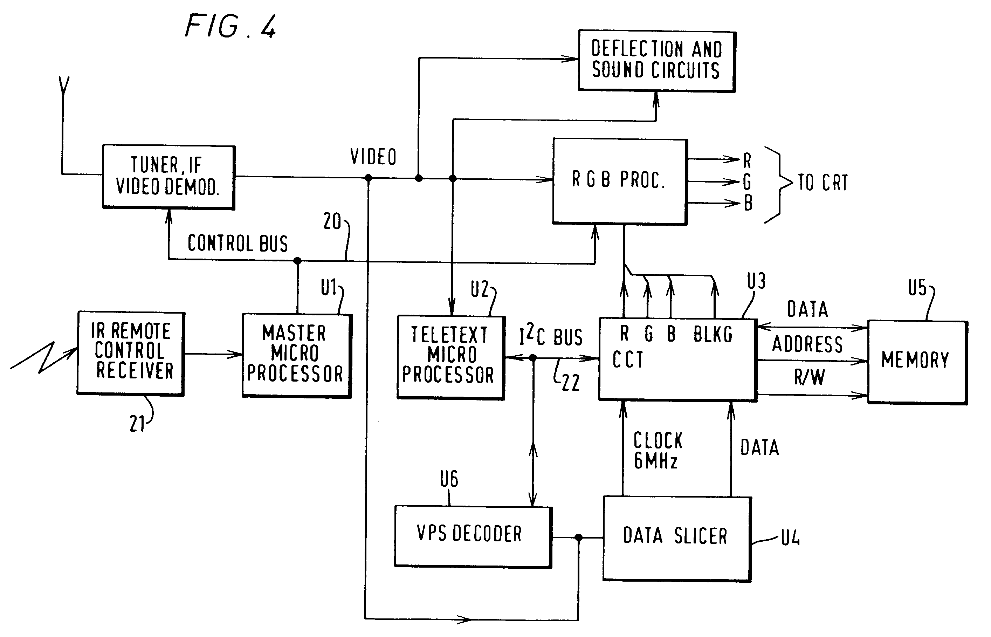

Referring to the drawing, Fig. 4 shows part of the block diagram of a current TV receiver, such as Grundig Model 2600, with a built-in teletext decoder circuit. A first microprocessor (µP) U1 controls the various stages of the TV receiver by means of a control bus 20 upon receiving a command from an IR remote control receiver 21. The teletext decoder comprises a second microprocessor U2, which controls, by means of an I2C bus 22, the function of a CCT decoder U3 (CCT = Computer Controlled Teletext decoder). For a more detailed description of the I2C bus 22, reference should be made to the Philips Elcoma Technical Publication of November 1986 entitled "I2C Bus Specification". See also the Philips Data Handbook - published in 1987, with particular reference to the integrated circuits type SAA 5231 and SAA 5243 described therein for suitable circuit devices.

In Fig. 4, composite video is fed to a videoprocessor (or "data slicer") U4 (such as Type SAA 5231), which separates the serial teletext data stream from video and which provides a line-locked 6 MHz master clock frequency. Furthermore, a VPS decoder circuit U6, which is added to the standard TV chassis for purposes of the present invention, is connected to the I2C bus 22 and is provided with composite video information. One type of VPS decoder circuit is described, for example, in the Siemens publication "IC's for Entertainment Electronics", VPS System, Siemens, Edition 5 (1986). A preferred circuit type for the VPS decoder U6 is the Type SAA 4700.

The CCT decoder circuit U3 provides a number of different functions selectable via the I2C bus 22. It is necessary for the title search that data can be read from or written to a teletext random access memory (RAM) U5 at desired memory locations through the I2C bus 22. Thereafter, messages created in microprocessor U2 can be displayed on the screen of the TV receiver or microprocessor U2 can read and manipulate text stored in memory U5. Basically, the CCT decoder circuit U3 decodes the incoming teletext data stream, stores the selected pages or portions thereof in memory U5 and provides R, G, B signals and blanking when the selected page or portion thereof is to be displayed on the CRT.

The title search sequence is initiated upon selecting a new channel or when the TV set is turned on. Microprocessor U2 reads the VPS code extracted from the accompanying image-representative video signal by VPS decoder U6. Using the country and program source codes in the VPS data, an abbreviation of the station name of three or more characters can be taken from an appropriate look-up table. This table may either be stored in the micro-processor U2 or may be located in an additional memory. The information to be displayed on screen is written into a separate part of the memory U5 reserved for display purposes (see below), Microprocessor U2 also conditions the teletext decoder U3 to a "don't care magazine - don't care tens page number" status. In this mode of operation decoder U3 ignores the hundreds (magazine) and tens digits of teletext page numbers. Decoder U3 decodes the incoming teletext data stream byte by byte and writes the text into predetermined portions of the memory U5 as will be explained below. The microprocessor U2 reads the memory content and searches for the concealed VPV program identification information, transmitted along with the program pages (see Figs. 3a & 3b where the concealed data is shown on a shaded background). The complete page however, cannot be read and analyzed before a new page appears, due to the fact that there is a speed limitation associated with the I2C bus 22. Therefore, microprocessor U2 is arranged to take advantage of a feature of the CCT decoder U3 (e.g. type SAA5243) whereby four independent parallel page acquisition circuits are provided. This feature will be explained in greater detail below. Typically, transferring one byte on the I2C bus 22 takes 90µS due to speed limitations of bus 22. Because of this limitation and the characteristics of CCT decoder U3, the following read operation cannot be started during the next 48µS. Thus, a read operation needs a cycle time of 138µS. Each character is analyzed while the next is transferred. Due to the speed limitation of the microprocessor U2, character analysis may exceed 138µS in duration.

Considering that address bytes also have to be transferred via the I2C bus 22, the time to transfer and analyze the required data can take up to 120mS. If the incoming teletext pages were continuously written into the memory U5, the single pages would not remain stored for the required 120mS under the operating conditions of at least some current teletext transmissions.

To guarantee a successful search operation within the speed limitations mentioned above, a flexible method of the CCT decoder U3 for requesting pages is used. Each digit of the three digit page number has an associated flag which indicates whether this digit should be ignored or not when comparing page numbers. A "don't care" flag setting will be denoted by an 'X' in the following explanation.

The CCT decoder U3 has four independent page acquisition circuits within the integrated circuit, each of which can write its decoded data to a separate space allocation in the memory U5. In operation, three of these acquisition circuits are loaded with page requests "xx1", "xx2" and "xx3" respectively, while the fourth remains unused. Thus acquisition circuit 1 recognizes pages with numbers arranged as "xx1", for instance 101, 111, ..., 291, 301, 311,... The teletext page 301, for example, once decoded, remains in the memory U5 - not until page 302 arrives-, but until it is overwritten by page 311. This time is amply sufficient to analyze page 301.

The 'units' 1, 2 and 3 have been chosen since current TV stations place their program schedules on teletext pages "xx1", "xx2" and "xx3". The search method automatically steps up to "xx4", "xx5" (or further) should a search operation end unsuccessfully because other page numbers are being used for teletext. A "found" bit of CCT decoder U3 is used to synchronize the search of the incoming teletext pages and to avoid analyzing the same page twice. The search method can handle all program page arrangements meeting the VPT specifications. As soon as coincidence with the VPS label is found, the matching title is displayed, as explained below.

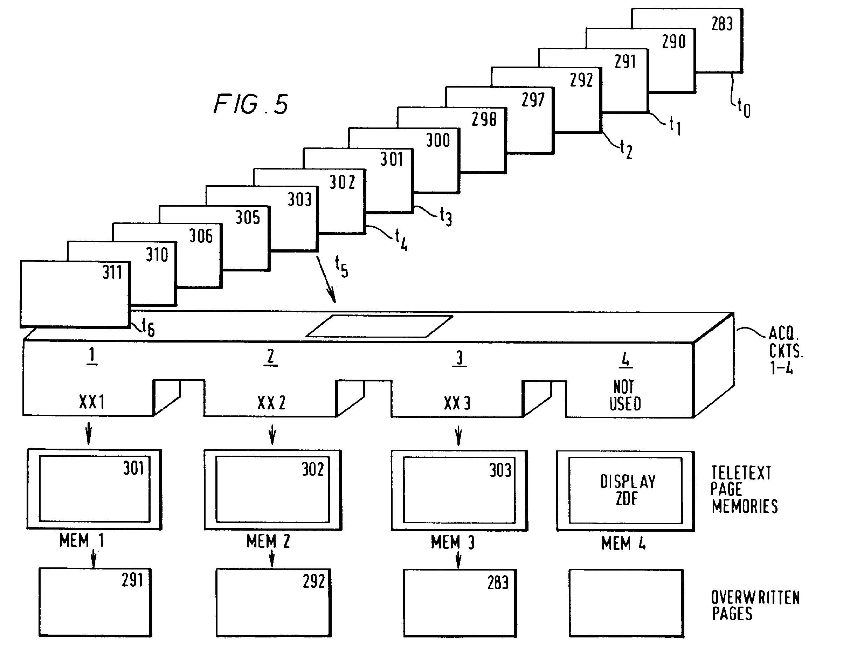

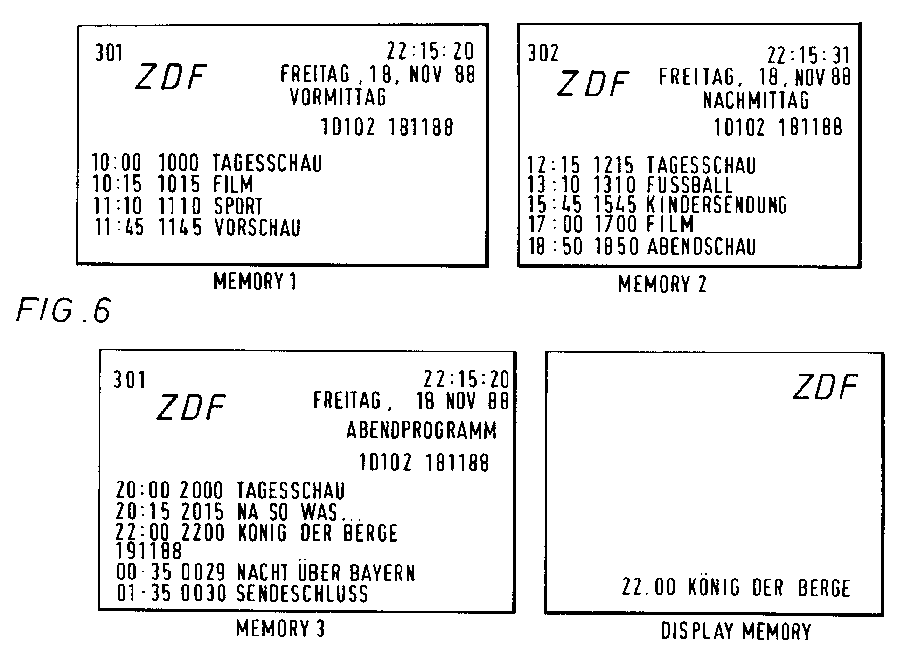

In Figs. 5 and 6, a schematic representation of a typical search operation is shown. It is assumed in this example that pages 301, 302 and 303 (see Fig. 6) contain the TV program schedule of the day. Further, it is assumed that the microprocessor U2 has read the VPS data (ID102 181188 2200) of the running program out of the VPS decoder U6 at 22:15 when the TV set was turned on. The microprocessor U2 first converts the country and program source code "1D102" into the network name "ZDF" via the look-up table and transfers the result into display memory position 4 (Fig. 5).

As mentioned above, the three acquisition circuits 1, 2, 3 in CCT decoder U3 are preset to xx1, xx2 and xx3. Acquisition circuit 3 recognizes page 283 at time to which is then decoded and written into memory space 3 (in U5), where it remains until overwritten by page 303 at time t5. Page 291 is written into memory space 1 (in U5) at time t1 and is overwritten by page 301 at t3.

Each time a new page is written into memory, the microprocessor U2 immediately starts a VPS matching analysis. This matching analysis ends prematurely with pages 283 and 291 as they contain no program information. Page 301 is a program page but the VPS matching analysis ends prematurely in this case as well since only the country code, the program source code and the date coincide with the running program VPS data (see above), but not the VPS time. This can be seen in Figure 6. The same result holds for page 302, which was received at time t4.

However, at time t5, on receipt of page 303, the VPS matching search operation succeeds and the program page containing the title of the current or running program is found. The next step, identifying the correct title on this page, is obtained as follows. The microcomputer recognizes the VPS time "2200" as being the third 4-digit number in the concealed VPS data of this particular page (1st 2000, 2nd 2015). Therefore, the third title from the top should be displayed. That title is transferred into memory space 4 (see Fig. 5) which is reserved for display purposes, thereby ensuring that the title always appears at the same screen location. The CCT decoder U3 then works in its mixed mode for a few seconds, displaying the title and station text with picture. It is important to note that the search operation operates similarly on all possible VPT arrangements (for example, that of Figure 2b).

Should a search operation end unsuccessfully, due to the fact that some program pages are transmitted on pages XX5 and the desired program information is on one of those pages, the microprocessor U2 is arranged to automatically increase the "units" digit of the acquisition circuits to "4", "5", and "6", respectively, allowing that set of pages to be decoded and processed for finding matching program identification information.

Due to the time relations mentioned above, the microprocessor U2 has time enough to read the incoming teletext pages, to find the page containing the particular TV program schedule, and to analyze the relations between VPS data and the titles of the transmissions. As soon as the correct title is found, it is displayed on the CRT as described above.

The information to be displayed on the CRT is written into a separate part of the page memory U5 reserved for display purposes as noted above.

While this invention has been described in terms of a preferred embodiment, other arrangements within the scope of this invention may occur to persons skilled in this art, which scope is set forth in the following claims.

## Claims

1. Signal apparatus for use in a television signal processing system wherein the television signals include image-representative information and first and second groups of accompanying segments of supplementary information, said first group including program identification information related to the currently-received television program; and a second group including a multi-page listing of program title information, program identification information, and program source information, the supplementary information being encoded during vertical blanking intervals of the signal with at least the program identification information of said first group being disposed within vertical blanking intervals of related image-representative information and further being included within said listing, said signal processing apparatus comprising: tuning means for selectively receiving television signals transmitted by individual program sources, the received signals including image-representative information and accompanying segments of supplementary information;
first signal decoder means (U2) for decoding said second group including said listing and said included program identification information; memory means (U5) for storing and retrieving at least said program title information and included program identification information decoded by said first signal decoder means;
a first controller means (U3) coupled to said first decoder means and said memory means for selectively transferring said segments of supplementary information among said memory means, said first decoder means and said first controller means;
second signal decoder means (U6) for decoding said first group including said program identification disposed within said blanking intervals of related image-representative information;
said first controller means (U3), upon initial reception of signals from an individual program source by said tuning means causing said second signal decoder means to decode said program identification information accompanying related image-representative information, controlling said first signal decoder means to identify matching program identification information within said listing and to recover at least said corresponding program title information from said listing;
**characterized in that**
said first signal decoder means (U2) is arranged for decoding a first predetermined set of pages of the listing having page numbers ending in a first predetermined set of digits and said first signal decoder means (U2) causes such set of pages of the listing to be stored in sequence in predetermined locations in said memory means during a time interval until subsequent pages of said listing having page numbers ending in the first predetermined set of digits are overwritten into corresponding memory locations.

2. Signal processing apparatus according to Claim 1 characterized in that said first predetermined set of digits corresponds to page numbers where program listings are normally included.

3. Signal processing apparatus according to Claim 2 characterized in that said listing comprises teletext information, said first signal decoder means (U2) comprises a teletext decoder system (U2), said second signal decoder means (U6) is arranged for detecting VPS signals and said first signal decoder means is further characterized in that a plurality of parallel page acquisition circuits is provided.

4. Signal processing apparatus according to Claim 2 characterized in that said first controller means (U3) conditions said first signal decoder means for processing sets of pages having page numbers ending in the digits 1, 2 and 3.

5. Signal processing apparatus according to Claim 1 characterized in that said listing comprises teletext information, said first signal decoder means comprises a teletext decoder system (U2), said second signal decoder means (U6) is arranged for detecting VPS signals and said processing system is characterized in that said time interval is greater than the time required to identify matching program identification information in the VPS signals and a single page of the teletext listing.

6. Signal processing apparatus according to Claim 5 characterized in that said first controller means (U3) comprises a microprocessor and said first signal decoder means (U2) is arranged for processing sets of pages having page numbers ending in the digits 1, 2 and 3.

7. Signal processing apparatus according to Claim 6 characterized in that said first controller means (U3) provides first control signals to said first signal decoder means, upon initial reception of a running program, to cause said first signal decoder means (U2) to search teletext transmissions for program identification information matching corresponding information provided by said second signal decoder means.

8. Signal processing apparatus according to Claim 1 characterized in that said first controller means (U3) resets said first signal decoder means (U2) for decoding a second set of pages having page numbers ending in a second predetermined set of digits upon failure to identify matching program identifying information in said pages ending in said first predetermined set of digits.

## Patentansprüche

1. Signaleinrichtung zur Verwendung in einem Fernsehsignal-Verarbeitungssystem bei dem die Fernsehsignale bildrepräsentative Information und eine erste und eine zweite Gruppe von begleitenden Segmenten von Ergänzungsinformation enthalten, wobei die erste Gruppe eine Programmidentifizierungs-Information beinhaltet, die zu dem aktuell empfangenen Fernsehprogramm bezug hat; und eine zweite Gruppe, die ein Mehr-Seiten-Listing oder -Liste von Programm-Titelinformation, Programm-Identififiations-Information und Programm-Quelleninformation enthält, wobei die Ergänzungsinformation während der Vertikal-Austastintervalle des Signals codiert ist mit zumindest der Programm-Identifikations-Information der ersten Gruppe, die innerhalb der Vertikal-Austastintervalle von verwandter bildrepräsentativer Information vorgesehen ist und weiterhin in der Liste oder dem Listing enthalten ist, welche Signalverarbeitungs-Einrichtung enthält:
- ein Abstimmittel zum wahlweisen Empfang von Fernsehsignalen, die von individuellen Programmquellen ausgestrahlt werden, wobei die Empfangssignale bildrepräsentative Information und begleitende Segmente von Ergänzungsinformation beinhalten;
- ein erstes Signal-Dekodermittel (U2) zum Dekodieren der zweiten Gruppe, die das Listing bzw. die Liste und die einbezogene Programmidentifikations-Information enthält;
- ein Speichermittel (U5) zum Speichern und Lesen bzw. Wiedergewinnen zumindest der Programm-Titelinformation und der einbegriffenen Programmidentifikations-Information, die von dem ersten Signal-Dekodermittel dekodiert werden;
- ein erstes Steuermittel (U3), das mit dem ersten Dekodermittel und dem Speichermittel zum wählbaren Übertragen der Segmente von Ergänzungsinformation zwischen dem Speichermittel, dem ersten Dekodermittel und dem ersten Steuermittel;
- ein zweites Signal-Dekodermittel (U6) zum Dekodieren der ersten Gruppe, beinhaltend die Programm-Identifikation, die innerhalb der Austastintervalle der verwandten bildrepräsentativen Information gelegen ist;
- wobei das erste Steuermittel (U3) bei anfänglichem Erhalt von Signalen von einer individuellen Programmquelle von dem Abstimmittel das zweite Signal-Dekodermittel zum Dekodieren der Programm-Identifikations-Information veranlaßt, die die verwandte bildrepräsentative Information begeleitet, um das erste Signal-Dekodermittel zum Identirizieren übereinstimmender oder passender Programm-Identifikations-Information innerhalb des Listings oder der Liste zu steuern und zumindest die korrespondierende Programm-Titelinformation aus dem Listing wiederzugewinnen; **dadurch gekennzeichnet**, daß
- das erste Signal-Dekodermittel (U2) zum Dekodieren eines ersten vorbestimmten Satzes von Seiten des Listings oder der Liste ausgebildet ist, die Seitenzahlen enthält, die mit einem ersten vorbestimmten Satz von Digits enden und daß das erste Signal-Dekodermittel (U2) veranlaßt, daß ein solcher Satz von Seiten des Listings in Aufeinanderfolge in vorbestimmten Speicherplätzen des Speichermittels während eines Zeitintervalls gespeichert wird, bis oder bevor folgende Seiten des Listings mit Seitenzahlen, die mit dem ersten vorbestimmten Satz von Digits enden, in korrespondierenden Speicherplätzen überschrieben werden.

2. Signal-Verarbeitungseinrichtung nach Anspruch 1, **dadurch gekennzeichnet**, daß der erste vorbestimmte Satz von Digits (Zahlen) mit Seitennummern korrespondiert, wo Programmlistings normalerweise beinhaltet sind.

3. Signal-Verarbeitungseinrichtung nach Anspruch 2, **dadurch gekennzeichnet**, daß das Listing oder die Liste Teletext-Information enthält, daß das erste Signal-Dekodermittel (U2) ein Teletext-Dekodersystem (U2) aufweist, daß das zweite Signal-Dekodermittel (U6) zum Erfassen von VPS-Signalen ausgebildet ist und daß das erste Signal-Dekodermittel weiter dadurch gekennzeichnet ist, daß mehrere parallele Seiten-Erfassungsschaltungen vorgesehen sind.

4. Signal-Verarbeitungseinrichtung nach Anspruch 2, **dadurch gekennzeichnet**, daß das erste Steuermittel (U3) das erste Signal-Dekodermittel zum Verarbeiten von Sätzen oder Blöcken von Seiten konditioniert, die Seitenzahlen haben, die mit den Ziffern 1, 2 und/oder 3 enden.

5. Signal-Verarbeitungseinrichtung nach Anspruch 1, **dadurch gekennzeichnet**, daß das Listing Teletext-Information enthält, daß das erste Signal-Dekodermittel ein Teletext-Dekodersystem (U2) enthält, daß das zweite Signal-Dekodermittel (U6) zum Erfassen von VPS-Signalen ausgebildet ist und daß das Verarbeitungssystem dadurch gekennzeichnet ist, daß das Zeitintervall größer ist als die Zeit, die erforderlich ist zum Identifieren von passender oder übereinstimmender Programm-Identifikations-Information in den VPS-Signalen und einer einzelnen Seite des Teletext-Listings.

6. Signal-Verarbeitungseinrichtung nach Anspruch 5, **dadurch gekennzeichnet**, daß das erste Steuermittel (U3) einen Mikroprozessor beinhaltet und daß das erste Signal-Dekodermittel (U2) zum Bearbeiten von Sätzen oder Blöcken von Seiten ausgebildet ist, die Seitenzahlen mit der Endziffer 1, 2 und/oder 3 haben.

7. Signal-Verarbeitungseinrichtung nach Anspruch 6, **dadurch gekennzeichnet**, daß das erste Steuermittel (U3) erste Steuersignale an das erste Signal-Dekodermittel bereitstellt, bei anfänglichem Empfang eines laufenden Programmes, um das erste Signal-Dekodermittel (U2) dazu zu veranlassen, Teletext-Übertragungen nach Programm-Identifikations-Information hin zu überprüfen oder abzusuchen, die mit korrespondierender Information übereinstimmt oder dazu passt, die von dem zweiten Signal-Dekodermittel bereitgestellt wird.

8. Signal-Verarbeitungseinrichtung nach Anspruch 1, **dadurch gekennzeichnet**, daß das erste Steuermittel (U3) den ersten Signal-Dekoder (U2) zurücksetzt zum Dekodieren eines zweiten Satzes oder Blockes von Seiten mit Seitenzahlen, die mit einem zweiten vorbestimmten Satz von Digits enden, wenn keine übereinstimmende oder passende Programm-Identifikations-Information in den Seiten identifizierbar ist, die mit dem ersten vorbestimmten Satz von Digits enden.

## Revendications

1. Equipement de traitement de signaux destiné aux systèmes de traitement de signaux télévisuels, caractérisé en ce qui les signaux télévisuels comportant des informations constituent l'image avec des premiers et deuxièmes groupes de segments d'informations complémentaires associées, ledit premier groupe contenant les informations d'identification de programme associées aux programmes de télévision actuellement reçues, et ledit second groupe contenant une liste multipages d'informations de titres de programmes, d'identification de programmes et de sources de programmes. Lesdites informations complémentaires sont codées au cours de l'intervalle de suppression de trame du signal, lesdits intervalles de suppression de trame associés aux informations d'image comportant au minimum les informations d'identification de programme dudit premier groupe lesquelles informations seront par la suite ajoutées à ladite liste. Ledit équipement de traitement de signaux se compose :
d'un moyen de réglage permettant de recevoir de manière sélective les signaux télévisuels émis par des sources de programmes spécifiques, lesdits signaux comportant les informations constituant l'image et les segments d'informations complémentaires associées ;
d'un premier décodeur (U2) servant à décoder ledit deuxième groupe contenant ladite liste et lesdites informations d'identification de programmes ;
d'une mémoire (U5) servant à stocker et extraire au minimum lesdites informations de titres et les informations d'identification de programmes décodées par ledit premier décodeur ;
d'un premier contrôleur (U3) couplé audit premier décodeur et à ladite mémoire afin de transférer de manière sélective lesdits segments d'informations complémentaires à ladite mémoire, audit premier décodeur et audit premier contrôleur ;
d'un deuxième décodeur (U6) servant à décoder ledit premier groupe comportant ladite identification de programme, cette dernière étant disposée dans les intervalles de verrouillage de trame des informations d'image associées.
Sur réception de signaux en provenance d'une source de programmes spécifique via ledit moyen de réglage, ledit premier contrôleur (U3) fait décoder au deuxième décodeur les informations d'identification de programmes contenues dans les informations d'image associées. Ledit premier contrôleur pilote ledit premier décodeur de manière à identifier les informations de programme correspondant dans ladite liste, et de manière à extraire au minimum les informations de titre du programme correspondant de ladite liste.
Equipement de traitement de signaux **caractérisé en ce que** :
le premier décodeur (U2) est configuré de manière à décoder une première série prédéfinie de pages de ladite liste, lesdites pages ayant des numéros de page se terminant par une première série de chiffres prédéfinie et en ce que ledit premier décodeur (U2) fait stocker dans l'ordre ladite série de pages de la liste dans des emplacements prédéfinis de ladite mémoire durant un certain intervalle de temps, jusqu'à ce que les pages suivantes de ladite liste, ayant des numéros de page se terminant par ladite série de chiffres prédéfinie soient écrasés dans les emplacements mémoire respectifs.

2. Equipement de traitement de signaux selon la Revendication 1, caractérisé en ce que ladite première série de chiffres prédéfinie correspond aux numéros de page contenant en principe les listes de programmes.

3. Equipement de traitement de signaux selon la Revendication 2, caractérisé en ce que ladite liste contient des informations Teletext, ledit premier décodeur (U2) contient un système de décodage Teletext (U2), ledit deuxième décodeur (U6) est configuré de manière à détecter des signaux VPS et ledit premier décodeur comporte plusieurs circuits parallèles d'acquisition de pages.

4. Equipement de traitement de signaux selon la Revendication 2, caractérisé en ce que ledit premier contrôleur (U3) fait traiter par ledit premier décodeur les séries de pages ayant des numéros de pages se terminant par les chiffres 1, 2 et 3.

5. Equipement de traitement de signaux selon la Revendication 1, caractérisé en ce que ladite liste contient des informations Teletext, ledit premier décodeur contient un système de décodage Teletext (U2), ledit deuxième décodeur (U6) est configuré de manière à détecter des signaux VPS, et en ce que ledit système de traitement permet d'obtenir un intervalle de temps supérieur à celui nécessaire pour identifier les informations d'identification de programme correspondantes dans le signal VPS et dans une page de la liste Teletext.

6. Equipement de traitement de signaux selon la Revendication 5, caractérisé en ce que ledit premier contrôleur (U3) est doté d'un microprocesseur, et en ce que ledit premier décodeur (U2) est configuré de manière à traiter des séries de pages ayant des numéros de page se terminant par les chiffres 1, 2 et 3.

7. Equipement de traitement de signaux selon la Revendication 6, caractérisé en ce que ledit premier contrôleur (U3) transmet des signaux de commande audit premier décodeur sur réception initiale du programme diffusé, de manière à faire rechercher audit premier décodeur (U2) les émissions Teletext contenant les informations d'identification de programme correspondant aux informations fournies par ledit deuxième décodeur.

8. Equipement de traitement de signaux selon la Revendication 1, caractérisé en ce que ledit premier contrôleur (U3), après échec de la recherche d'informations d'identification de programme correspondantes dans lesdites pages se terminant par ladite première série prédéfinie de chiffres, réinitialise le premier décodeur (U2) afin de décoder une deuxième série de pages ayant des numéros de page se terminant par une deuxième série prédéfinie de chiffres.
